# FASCICULE DE BREVET EUROPEEN

(11) **EP 2 715 894 B1**
(45) Date de publication et mention de la délivrance du brevet: **14.03.2018**
(21) Numéro de dépôt: 12728637.5
(22) Date de dépôt: 09.05.2012
(51) Int. Cl.: H02G 3/18

(54) **TRAPPE D'ACCÈS À DES APPAREILLAGES ÉLECTRIQUES**
ZUGANGSKLAPPE FÜR ELEKTROGERÄTE
ACCESS HATCH TO ELECTRICAL APPLIANCES

(30) Priorité: 23.05.2011 FR 1101585
(43) Date de publication de la demande: 09.04.2014
(73) Titulaire: Legrand France, 87000 Limoges (FR); Legrand SNC, 87000 Limoges (FR)
(72) Inventeur: DESTRUEL, Marc, F-53600 Chatres la Forêt (FR); RONDEAU, Jean-Luc, F-72650 La Chapelle St Aubin (FR)
(74) Mandataire: Orsini, Fabienne
(86) Numéro de dépôt international: PCT/FR2012/000188
(87) Numéro de publication internationale: WO 2012/160268

(56) Documents cités:
- EP-A2- 0 892 478
- US-A- 5 950 368

## Description

### DOMAINE TECHNIQUE AUQUEL SE RAPPORTE L'INVENTION

L'invention concerne, de manière générale, les installations électriques pour planchers.

Elle concerne plus particulièrement une trappe d'accès à des appareillages électriques logés sous un plancher, comportant :
- un cadre fermé qui délimite une ouverture d'accès et qui comporte des moyens de fixation à un plancher technique ou à un boîtier de boite de sol, et
- un couvercle monté mobile en rotation sur le cadre autour d'un axe de rotation, entre une position d'ouverture et une position de fermeture de ladite ouverture d'accès.

### ARRIERE-PLAN TECHNOLOGIQUE

Le cadre d'une trappe d'accès est généralement conçu pour délimiter proprement une fenêtre d'accès à un logement intérieur du plancher susceptible d'accueillir des appareillages électriques. Le couvercle est quant à lui conçu pour fermer ce logement afin d'isoler les appareillages électriques de l'extérieur.

On connaît notamment du document EP 0 892 478 une trappe d'accès telle que précitée, dans laquelle le cadre est équipé de moyens de fixation à une boîte de sol et dans laquelle le couvercle est monté de telle manière qu'en position fermée, il s'engage entièrement à l'intérieur du cadre.

Dans ce document, la trappe d'accès comporte un mécanisme de verrouillage du couvercle en position fermée, ainsi qu'une lame-ressort agencée pour repousser le couvercle vers l'avant afin de faciliter son ouverture lorsque le mécanisme de verrouillage est déverrouillé.

Cette lame-ressort présente une forme coudée, avec une première partie qui est fixée dans un logement prévu en creux dans le cadre, et une seconde partie qui, lorsqu'elle n'est pas contrainte par le couvercle, fait saillie vers l'avant du cadre.

Lorsque le couvercle est verrouillé en position fermée, il maintient la seconde partie de la lame-ressort sous tension, en appui contre le cadre. Dès lors, cette lame-ressort est inévitablement sujette au vieillissement, ce qui réduit son efficacité dans le temps et ce qui, à terme, peut provoquer sa rupture.

L'utilisation d'une telle lame-ressort nécessite par ailleurs un aménagement spécifique sur le cadre, si bien qu'elle ne peut être installée sur une trappe préexistante.

Une telle lame-ressort doit, de plus, présenter une raideur élevée pour pouvoir soulever le couvercle afin de faciliter son ouverture dès que le mécanisme de verrouillage est déverrouillé. Du fait de cette raideur, cette lame-ressort s'oppose à la fermeture totale du couvercle, si bien que l'utilisateur doit exercer un effort important sur le couvercle pour le refermer, au détriment de l'ergonomie de l'ensemble.

Enfin, lorsque le couvercle est poussé brutalement vers sa position fermée, il rebondit dangereusement sur la lame-ressort, au risque de casser la charnière d'articulation du couvercle sur le cadre.

On connaît également du document EP 1 724 894 une boîte de sol comportant un boîtier logé sous le plancher, fermé par une trappe d'accès telle que précitée.

Dans ce document, il est prévu un mécanisme de freinage permettant de ralentir la fermeture du couvercle, de manière à éviter à un opérateur de se coincer les doigts entre le couvercle et le cadre. Ce mécanisme de freinage comporte, sur deux côtés opposés du cadre, deux tiges présentant chacune une extrémité montée mobile en rotation sur le cadre et une extrémité montée mobile en translation dans un rail de freinage prévu sur le couvercle.

L'inconvénient majeur de cette trappe d'accès est que la liaison entre les tiges et le couvercle ne permet pas d'ouvrir complètement le couvercle, ce qui limite la facilité d'accès aux appareillages électriques logés sous le plancher.

Le cadre et le couvercle doivent en outre être spécifiquement conçus pour accueillir les tiges, si bien que ce mécanisme de freinage ne peut pas être adapté sur une trappe d'accès préexistante.

Cette trappe d'accès présente par ailleurs une architecture complexe, de manière qu'elle présente un coût d'assemblage élevé.

On connaît aussi du document US5950368 une trappe d'accès à une fosse ménagée dans le tarmac d'un aéroport.

La trappe d'accès comporte un cadre qui borde l'ouverture de la fosse, et un couvercle qui est monté sur charnière par rapport au cadre pour ouvrir et fermer l'accès à la fosse. Cette charnière comporte un pantographe permettant au couvercle de se soulever au-dessus du cadre suivant un mouvement de rotation translative, et un moyen d'amortissement du couvercle lorsqu'il bascule vers sa position rabattue.

### OBJET DE L'INVENTION

Afin de remédier à ces inconvénients de l'état de la technique, l'invention porte sur une trappe d'accès pour plancher équipée de moyens d'amortissement de la fermeture du couvercle qui ne s'opposent ni au verrouillage ni à l'ouverture complète de celui-ci, qui sont pérennes, sûrs et peu onéreux, et qui puissent s'adapter à toutes sortes de trappes d'accès.

Plus particulièrement, on propose selon l'invention une trappe d'accès telle que définie en introduction, qui comporte au moins un vérin comprenant une tige rigide qui est montée mobile en translation dans un fourreau, sous le contrôle d'un amortisseur, suivant un axe de translation incliné ou orthogonal par rapport audit axe de rotation, et dont une extrémité libre est adaptée à supporter le couvercle lorsque celui-ci bascule en position fermée.

Selon l'invention, le vérin n'est donc pas lié mécaniquement au couvercle. Ainsi, grâce à l'invention, le vérin ne limite pas l'ouverture du couvercle, ce qui permet à la trappe d'accès d'offrir un accès plus aisé aux appareillages électriques logés sous le plancher.

L'amortisseur prévu dans le vérin permet par ailleurs, lorsque le couvercle bascule vers sa position fermée, de limiter la vitesse de fermeture du couvercle, ce qui permet d'éviter à l'utilisateur de se coincer les doigts entre le couvercle et le cadre et ce qui permet d'éviter de détériorer les câbles électriques qui traversent la trappe d'accès.

D'autres caractéristiques avantageuses et non limitatives de la trappe d'accès conforme à l'invention sont les suivantes :
- le vérin est situé sur le cadre de telle manière que la distance entre ledit axe de rotation et ledit axe de translation est inférieure à la moitié de la distance entre ledit axe de rotation et le point du cadre le plus éloigné de cet axe de rotation ;
- le vérin présente une taille et une position sur le cadre telles que le couvercle vient en appui contre l'extrémité libre de la tige rigide du vérin lorsqu'il est incliné par rapport au cadre d'un angle déterminé, qui est supérieur à 30 degrés ;
- ledit axe de translation est orthogonal au plan moyen du cadre ;
- il est prévu deux vérins situés à distance l'un de l'autre et à égale distance dudit axe de rotation ;
- le cadre présente, sur une partie au moins de son contour, un rebord intérieur et le fourreau du vérin est rapporté et fixé sur ce rebord intérieur ;
- le fourreau vient de formation avec le cadre ;
- la plus grande dimension du cadre est inférieure à un mètre ;
- le cadre présente une forme rectangulaire, avec quatre branches qui délimitent ladite ouverture d'accès, ou ronde, avec une paroi latérale circulaire qui délimite ladite ouverture d'accès ;
- le cadre comporte des moyens de fixation à un plancher technique ; et
- le cadre comporte des moyens de fixation à un boîtier de boite de sol.

L'invention propose également une boîte de sol comportant un boîtier ouvert à l'avant, et une trappe d'accès telle que précité qui ferme l'ouverture avant du boîtier.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une trappe d'accès selon l'invention ;
- la figure 2 est une vue de détail de la zone II de la figure 1 ; et
- les figures 3 à 6 sont des vues schématiques partielles de la trappe d'accès de la figure 1, illustrant différentes positions du couvercle par rapport au cadre.

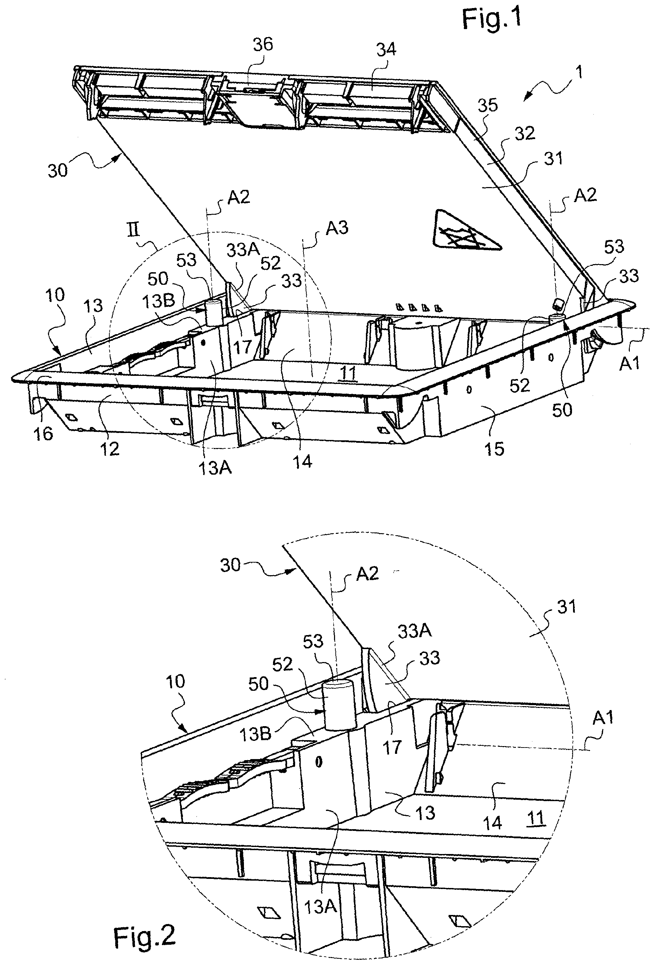

Sur la figure 1, on a représenté une trappe d'accès 1 à des appareillages électriques logés sous un plancher classique ou sous un plancher technique.

Dans la description, les termes « avant » et « arrière » seront alors utilisés en référence au plancher, l'avant désignant le côté tourné vers le haut et l'arrière désignant le côté tourné vers le bas.

On entend par « plancher classique » une paroi rigide ou souple qui est directement posée sur une dalle de béton coulée et qui est réalisée dans un matériau quelconque (bois, moquette, ...).

On entend par « plancher technique » une paroi rigide qui est surélevée par rapport à la dalle de béton coulée pour permettre le passage de goulottes électriques, et qui est maintenue dans cette position surélevée par des entretoises régulièrement réparties sur la dalle de béton.

Dans l'éventualité où le plancher est classique, les appareillages électriques sont logés dans une cavité de la dalle de béton. Cette dernière est alors nécessairement coulée autour d'un boîtier qui loge ces appareillages électriques. Une fenêtre est découpée dans ce plancher pour laisser accès aux appareillages électriques logés dans le boîtier.

Dans l'éventualité où le plancher est technique, les appareillages électriques sont situés entre la dalle de béton et le plancher. On peut alors prévoir de fixer un boîtier sur la dalle de béton et de découper une fenêtre dans le plancher pour laisser accès aux appareillages électriques logés dans le boîtier.

On peut également prévoir de poser les appareillages électriques directement sur la dalle de béton, sans utiliser de boîtier. On pourra notamment prévoir de visser un bloc multiprise sur la dalle de béton, sous une fenêtre préalablement découpée dans le plancher.

Quel que soit le type de plancher utilisé, la trappe d'accès 1 est conçue pour délimiter proprement la fenêtre préalablement découpée dans le plancher, et pour la fermer de manière à isoler les appareillages électriques de l'extérieur.

Telle que représentée sur la figure 1, la trappe d'accès 1 comporte à cet effet un cadre 10 fermé qui s'emboîte dans la fenêtre préalablement découpée dans le plancher et qui délimite une ouverture d'accès 11 aux appareillages électriques, d'axe principal A3 vertical.

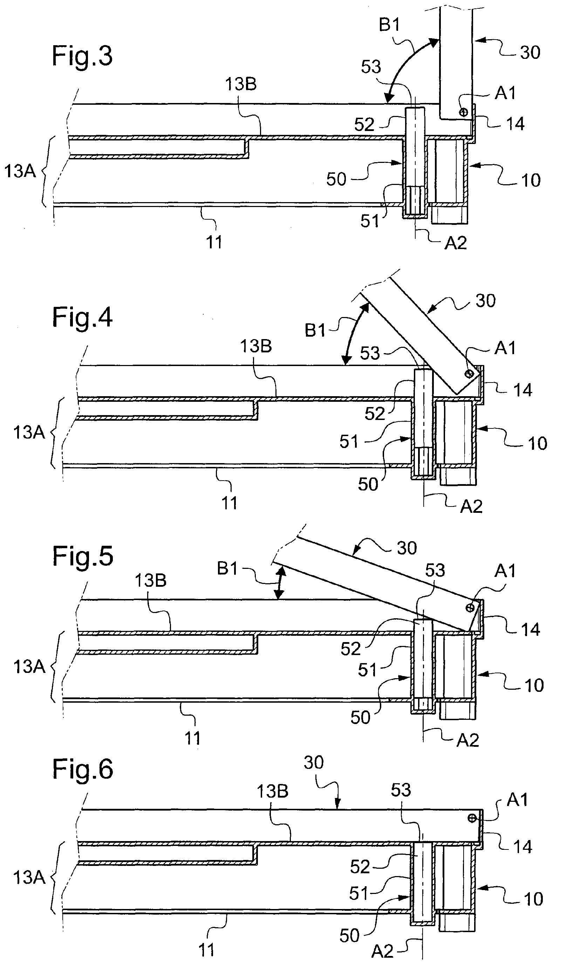

Elle comporte également un couvercle 30 qui est monté mobile en rotation sur le cadre 10 autour d'un axe de rotation A1, entre une position d'ouverture (figure 3) et une position de fermeture (figure 6) de cette ouverture d'accès 11.

Comme le montrent les figures 3 à 6, la trappe d'accès 1 comporte en outre au moins un vérin 50 comprenant :
- un fourreau 51 qui est fixe par rapport au cadre 10,
- une tige rigide 52 qui est montée mobile en translation dans le fourreau 51 suivant un axe de translation A2 non parallèle à l'axe de rotation A1, entre une position rentrée dans le fourreau 51 et une position sortie hors du fourreau 51 dans laquelle son extrémité libre 53 est adaptée à supporter le couvercle 30 lorsque celui-ci bascule vers sa position fermée, et
- un amortisseur 53 qui est conçu pour ralentir le déplacement de la tige rigide 52 vers l'arrière afin de ralentir le basculement du couvercle 30 en position fermée, et qui permet de rappeler automatiquement la tige rigide 52 vers sa position sortie dès que le couvercle 30 est ramené vers sa position ouverte.

Dans le mode de réalisation représenté sur les figures, le cadre 10 présente une forme carrée, avec quatre branches 12, 13, 14, 15 de longueurs identiques à la largeur de la fenêtre préalablement découpée dans le plancher.

La longueur des branches d'un tel cadre est généralement inférieure à un mètre. Elle est ici égale à 300 millimètres dans le cas où la trappe ferme un boîtier et à 600 millimètres dans le cas où la trappe ferme une fenêtre pratiquée dans un plancher technique, de telle sorte qu'elle présente les dimensions d'une dalle de sol.

On distingue deux branches longitudinales 12, 14 opposées, qui s'étendent en longueur parallèlement à l'axe de rotation A1, et deux branches transversales 13, 15 opposées, qui s'étendent en longueur orthogonalement à cet axe de rotation A1.

Les deux branches longitudinales 12, 14 sont formées par deux fines parois sensiblement planes, qui s'étendent ici dans des plans inclinés par rapport à l'axe principal A3 de l'ouverture d'accès 11 de telle sorte que le cadre 10 s'élargit vers l'avant.

Les deux branches transversales 13, 15 sont également formées par deux fines parois sensiblement planes, qui s'étendent en revanche dans des plans parallèles à l'axe principal A3 de l'ouverture d'accès 11.

Chacune de ces deux branches transversales 13, 15 porte sur sa face intérieure une partie de renfort 13A (voir figure 3). Cette partie de renfort 13A s'étend en longueur sur toute la longueur de la branche transversale 13, 15 associée, et en hauteur sur une partie seulement de la hauteur de cette branche, à partir du bord arrière de cette branche. Cette partie de renfort 13A définit notamment, du côté de ses deux extrémités, deux rebords plats 13B qui sont tournés vers l'avant et qui sont situés à proximité du bord avant de la branche associée.

Le cadre 10 est par ailleurs bordé à l'avant sur l'ensemble de sa périphérie par un trottoir 16 extérieur de faible épaisseur, qui est agencé de telle manière que sa face arrière prenne appui sur la face avant du plancher, autour de la fenêtre préalablement pratiquée dans le plancher, lorsque le cadre 10 est rapporté dans cette fenêtre.

Les branches 12, 13, 14, 15, les parties de renfort 13A et le trottoir 16 du cadre 10 sont ici réalisés d'une seule pièce, par moulage d'une matière plastique.

Le cadre 10 est équipé de moyens de fixation adaptés à bloquer ce dernier en position fixe dans la fenêtre pratiquée dans le plancher.

Ces moyens de fixation, non représentés sur les figures, sont préférentiellement conçus pour se fixer à un plancher technique ou à un boîtier d'une boîte de sol, de manière à pouvoir être utilisable sur tout type de plancher.

Pour se fixer au plancher technique, les moyens de fixation pourront ainsi comporter des griffes prévues en saillie sur les faces extérieures des branches du cadre qui, sous le contrôle de vis, pourront venir s'accrocher à la face arrière du plancher technique afin de bloquer le trottoir du cadre en appui contre la face avant du plancher.

Pour se fixer au boîtier d'une boîte de sol, les moyens de fixation pourront aussi comporter des pattes d'encliquetage prévues en saillie sur les faces intérieures des branches du cadre qui, sous le contrôle de leviers accessibles à l'utilisateur, pourront venir coopérer avec des tiges rainurées prévues en saillie des quatre coins du fond du boîtier. Ainsi, la trappe d'accès pourra être fixée sur le boîtier à la hauteur souhaitée, de manière que ces deux éléments forment ensemble une boîte de sol.

Comme le montre la figure 1, le couvercle 30 est pour sa part formé par une paroi rigide 31 sensiblement plane, qui est bordée par un rebord périphérique 32 qui s'étend vers l'avant, orthogonalement à la paroi rigide 31. Ce rebord périphérique 32 comporte ainsi quatre segments droits, dont deux segments longitudinaux 34 parallèles à l'axe de rotation A1 et deux segments transversaux 35 orthogonaux à cet axe.

Ce rebord périphérique 32 définit ainsi avec la paroi rigide 31 un logement parallélépipédique dans lequel il est possible de loger un tronçon de plancher, de manière à dissimuler la trappe d'accès 1 lorsque le couvercle 30 est refermé sur le cadre 10.

Le rebord périphérique 32 s'étend sur une hauteur égale à la distance séparant les rebords plats 13B et le bord avant du cadre 10. Ainsi, en position de fermeture, le couvercle 30 vient se loger entièrement dans le cadre 10, en appui contre ces rebords plats 13B, de telle manière que le tronçon de plancher s'étend à la même hauteur que le reste du plancher.

Le couvercle 30 est articulé sur le cadre 10 autour de l'axe de rotation A1 par un moyen de charnière quelconque.

Ici, ce moyen de charnière comporte deux flancs latéraux 33 en forme de quart-de-disque, qui s'étendent à partir de la face arrière de la paroi rigide 31, orthogonalement à celle-ci et vers l'arrière.

Comme le montre mieux la figure 2, chacun de ces deux flancs latéraux 33 présente plus précisément un premier bord droit 33A qui est solidaire de la paroi rigide 31 le long de l'un des segments transversaux 35 du rebord périphérique 32, et un second bord droit (non visible sur les figures) qui s'étend à l'aplomb de l'un des segments longitudinaux 34 du rebord périphérique 32, vers l'arrière.

Le cadre 10 comporte, en correspondance, au moins deux logements 17 situés en creux dans ses parties de renfort 13A et qui débouchent sur les rebords plats 13B par des fentes de largeurs égales, au jeu près, à l'épaisseur des flancs latéraux 33 du couvercle 30.

Ces logements 17 sont ainsi agencés pour accueillir les deux flancs latéraux 33 du couvercle 30, pour permettre à ce dernier de pivoter par rapport au cadre 10 entre sa position d'ouverture (figure 3) et sa position de fermeture (figure 6).

Ici, il est prévu quatre logements 17 identiques, respectivement situés aux quatre coins du cadre 10.

De cette manière, il est possible de monter le couvercle 30 sur le cadre 10 de telle sorte qu'il bascule autour de l'axe longitudinal de l'une ou l'autre des deux branches longitudinales 12,14 du cadre 10, en engageant ses flancs latéraux 33 dans les deux logements 17 adjacents à l'une ou à l'autre de ces deux branches.

Il est par ailleurs prévu des moyens pour optimiser le guidage du pivotement du couvercle 30 autour de l'axe de rotation A1.

Ces moyens, non visibles sur les figures, pourront par exemple se présenter sous la forme de deux plots coaxiaux, situés de part et d'autre des flancs latéraux 33 du couvercle 30 et adaptés à être encliquetés dans deux cavités prévues en correspondance, en creux dans les parois intérieures des logements 17 du cadre 10.

Ces moyens sont alors situés de telle manière que lorsque le couvercle 30 arrive en position d'ouverture, à angle droit par rapport au cadre 10, sa face avant vient en butée contre la face intérieure de la branche longitudinale 14 du cadre 10, ce qui permet de retenir le couvercle 30 dans cette position.

Le couvercle 30, équipé de ses deux flancs 33, est ici réalisé d'une seule pièce, par moulage d'une matière plastique.

Pour bloquer le couvercle 30 en position de fermeture sur le cadre 10, il est par ailleurs prévu des moyens de verrouillage 36.

Ces moyens de verrouillage comportent en l'espèce un levier de manoeuvre (non visible sur les figures) monté mobile en rotation sur le couvercle 30 dans une position accessible à l'usager, et une patte 36 adaptée à pivoter sous le contrôle du levier de manoeuvre pour venir s'engager dans une fenêtre (non visible) prévue en correspondance dans la branche longitudinale 12 du cadre 10.

Tel que représenté sur la figure 1, le cadre 10 porte ici deux vérins 50 respectivement situés sur les deux branches transversales 13, 15 du cadre 10, à proximité de la branche longitudinale 14 du cadre 10 qui s'étend suivant l'axe de rotation A1 autour duquel le couvercle 30 bascule.

Dans le mode de réalisation représenté sur les figures, chaque vérin 50 est ici intégré en partie au cadre 10. Ainsi donc, comme l'illustre bien la figure 3, le fourreau 51 de chaque vérin 50 vient de formation avec le cadre 10.

Le fourreau 51 est formé par une paroi tubulaire, cylindrique de révolution autour d'un axe de translation A2 qui est vertical (c'est-à-dire orthogonal au plan de la face arrière du trottoir 16 du cadre 10). Il traverse l'espace intérieur creux des parties de renfort 13A correspondant du cadre 10 et s'étend ainsi depuis la paroi arrière de cette partie de renfort 13A jusqu'au rebord plat 13B. Il est fermé du côté de son extrémité arrière par la paroi arrière de la partie de renfort 13A et est ouvert du côté de son extrémité avant de telle sorte qu'il débouche sur le rebord plat 13B.

Ici, il est prévu qu'un fourreau 51 débouche sur chacun des quatre rebords plats 13B du cadre 10, de manière que, selon que le couvercle 30 est monté basculant autour de l'un ou l'autre des deux axes longitudinaux des branches longitudinales 12, 14 du cadre 10, les tiges rigides 52 des vérins 50 puissent être installées dans les fourreaux 51 situés à proximité de cette branche longitudinale 12, 14.

Ainsi, les vérins 50 peuvent être montés sur le cadre 10 de telle manière que la distance entre les axes de translation A2 des tiges rigides 52 et l'axe de rotation A1 soit inférieure à la moitié de la longueur des branches transversales 13, 15 du cadre 10.

Ici, les tiges rigides 52 sont formées par des tubes cylindriques de diamètres extérieurs identiques, au jeu près, aux diamètres intérieurs des fourreaux 51.

Elles sont laissées ouvertes sur leurs extrémités arrière et sont fermées sur leurs extrémités avant 53.

Pour éviter que les tiges rigides 52 puissent sortir de leurs fourreaux 51, il est prévu des moyens de butée (non représentés sur les figures). Ces moyens de butée peuvent par exemple se présenter sous la forme de dents d'encliquetage en saillie de la paroi latérale des tiges rigides 52, qui autorisent le montage des tiges rigides 52 dans leurs fourreaux 51 et qui les empêchent ensuite d'en sortir.

Ainsi, chaque tige rigide 52 est libre de se translater dans son fourreau 51, entre une position rentrée (figure 6) dans laquelle son extrémité arrière s'applique contre le fond du fourreau 51 et une position sortie (figure 3) dans laquelle son extrémité avant 53 fait saillie du fourreau 51 à une hauteur déterminée au-dessus des rebords plats 13B.

La distance entre l'axe de rotation A1 et les axes de translation A2 ainsi que cette hauteur déterminée sont choisies de telle sorte que le couvercle 30 vient en appui contre l'extrémité avant 53 de la tige rigide 52 lorsqu'il est incliné par rapport au cadre 10 d'un angle B1 qui est supérieur à 30 degrés, et qui est ici égal à 45 degrés (voir figure 4).

De cette manière, comme le montrent les figures 3 à 6, le couvercle 30 est laissé libre de basculer sur une première moitié de sa course depuis sa position d'ouverture vers sa position de fermeture, puis il est ensuite ralenti par les vérins 50 sur une seconde moitié de sa course, ce qui laisse le temps à l'utilisateur de retirer ses doigts pour éviter de se les coincer entre le cadre 10 et le couvercle 30.

L'amortisseur comporte quant à lui une réserve d'air ne pouvant s'échapper hors du vérin 50 que par un orifice de petite dimension, ce qui permet de freiner le couvercle lorsqu'il bascule en appui contre les vérins. De cette manière, le couvercle bascule vers sa position de fermeture à une vitesse réduite et sensiblement constante sur la seconde moitié de sa course.

L'amortisseur comprend également un ressort de rappel de la tige rigide 52 en position sortie, qui est logé à l'intérieur de la tige rigide 52 et qui est comprimé entre la face avant du fond du fourreau 51 et la face arrière de l'extrémité avant 53 de la tige rigide 52.

Ce ressort présente une raideur telle que les deux vérins 50 ne peuvent pas s'opposer au basculement du couvercle 30 en position de fermeture. Il présente toutefois une raideur suffisante pour repousser la tige rigide 52 en position sortie lorsque plus aucun effort n'est exercé par le couvercle 30 sur l'extrémité avant 53 de cette tige rigide 52.

La présente invention n'est nullement limitée au mode de réalisation décrit et représenté, mais l'homme du métier saura y apporter toute variante conforme à son esprit.

On pourra par exemple prévoir que le cadre et le couvercle présentent des formes circulaires. Ainsi le cadre pourrait-il notamment être fixé sur un boîtier cylindrique de boîte de sol.

On pourrait également prévoir que les vérins soient distincts du cadre, auquel cas l'assemblage de la trappe d'accès comporterait une étape de fixation des fourreaux des vérins sur les rebords plats du cadre. L'avantage de cette solution est que les vérins pourraient alors être rapportés sur des cadres préexistants, au cours de chantier de rénovation des trappes d'accès.

On pourra aussi prévoir, dans le mode de réalisation de l'invention où la trappe d'accès est assemblée à un boîtier, de fixer les fourreaux des vérins non pas sur le cadre de la trappe d'accès, mais sur les parois latérales du boîtier lui-même.

On pourra bien entendu également prévoir que le boîtier forme avec le cadre de la trappe d'accès une pièce monobloc.

On pourrait par ailleurs prévoir que le cadre et/ou le couvercle soient réalisés par découpage et pliage d'un feuillard métallique, en particulier si le boîtier sur lequel il est rapporté est lui-même réalisé en matière métallique.

Selon une autre variante, l'amortisseur pourra être du type hydraulique.

## Revendications

1. Trappe d'accès (1) à des appareillages électriques logés sous un plancher, comportant :
- un cadre (10) fermé qui délimite une ouverture d'accès (11) et qui comporte des moyens de fixation à un plancher technique ou à un boîtier de boite de sol, et
- un couvercle (30) monté mobile en rotation sur le cadre (10) autour d'un axe de rotation (A1), entre une position d'ouverture et une position de fermeture de ladite ouverture d'accès (11),
comportant au moins un vérin (50) comprenant une tige rigide (52) qui est montée mobile en translation dans un fourreau (51), sous le contrôle d'un amortisseur, suivant un axe de translation (A2) incliné ou orthogonal par rapport audit axe de rotation (A1), et dont une extrémité libre (53) est adaptée à supporter le couvercle (30) lorsque celui-ci bascule en position fermée, **caractérisé en ce que** le fourreau (53)vient de formation avec le cadre 10).

2. Trappe d'accès (1) selon la revendication précédente, dans laquelle le vérin (50) est situé sur le cadre (10) de telle manière que la distance entre ledit axe de rotation (A1) et ledit axe de translation (A2) est inférieure à la moitié de la distance entre ledit axe de rotation (A1) et le point du cadre (10) le plus éloigné de cet axe de rotation (A1).

3. Trappe d'accès (1) selon l'une des revendications précédentes, dans laquelle le vérin (50) présente une taille et une position sur le cadre (10) telles que le couvercle (30) vient en appui contre l'extrémité libre (53) de la tige rigide (52) du vérin (50) lorsqu'il est incliné par rapport au cadre (10) d'un angle (B1) déterminé, qui est supérieur à 30 degrés.

4. Trappe d'accès (1) selon l'une des revendications précédentes, dans laquelle ledit axe de translation (A2) est orthogonal au plan moyen du cadre (10).

5. Trappe d'accès (1) selon l'une des revendications précédentes, dans laquelle il est prévu deux vérins (50) situés à distance l'un de l'autre et à égale distance dudit axe de rotation (A1).

6. Trappe d'accès (1) selon l'une des revendications 1 à 5, dans laquelle le cadre (10) présente, sur une partie au moins de son contour, un rebord intérieur (13A) et dans lequel le fourreau (51) du vérin (50) est rapporté et fixé sur ce rebord intérieur (13A).

7. Trappe d'accès (1) selon l'une des revendications précédentes, dans laquelle la plus grande dimension du cadre (10) est inférieure à un mètre.

8. Trappe d'accès (1) selon l'une des revendications précédentes, dans laquelle le cadre (10) présente une forme rectangulaire, avec quatre branches (12, 13, 14, 15) qui délimitent ladite ouverture d'accès (11), ou ronde, avec une paroi latérale circulaire qui délimite ladite ouverture d'accès.

9. Trappe d'accès (1) selon l'une des revendications précédentes, dans laquelle le cadre (10) comporte des moyens de fixation à un boîtier de boite de sol.

10. Boîte de sol comportant un boîtier ouvert à l'avant et une trappe d'accès (1) selon la revendication précédente, qui est fixée au boîtier afin de fermer son ouverture avant.

## Patentansprüche

1. Zugangsklappe (1) für den Zugang zu unter einem Boden gelegenen Elektrogeräten mit
- einem geschlossenen Rahmen (10), der eine Zugangsöffnung (11) begrenzt und der Mittel zum Befestigen an einem technischen Boden oder an einem Bodenkasten aufweist, und
- einem Deckel (30), der so am Rahmen (10) befestigt ist, daß er um eine Drehachse (A1) zwischen einer Stellung, in der die Zugangsöffnung (11) offen ist, und einer Stellung, in der sie geschlossen ist, drehbeweglich ist,
wobei sie wenigstens einen Stellantrieb (50) mit einem starren Stab (52) aufweist, der in einem Mantel (51), unter Einwirkung eines Stoßdämpfers, entlang einer gegenüber der Drehachse (A1) geneigten oder senkrechten Translationsachse (A2) translationsbeweglich angebracht ist und dessen freies Ende (53) dazu ausgelegt ist, den Deckel (30) abzustützen, wenn dieser in die geschlossene Stellung geht, **dadurch gekennzeichnet, daß** der Mantel (53) mit dem Rahmen (10) einstückig ausgebildet ist.

2. Zugangsklappe (1) gemäß dem vorangehenden Anspruch, bei der der Stellantrieb (50) auf dem Rahmen (10) so gelegen ist, daß der Abstand zwischen der Drehachse (A1) und der Translationsachse (A2) kleiner als die Hälfte des Abstands zwischen der Drehachse (A1) und dem von der Drehachse (A1) am weitesten entfernten Punkt des Rahmens (10) ist.

3. Zugangsklappe (1) gemäß einem der vorangehenden Ansprüche, bei der der Stellantrieb (50) eine Größe und eine Position auf dem Rahmen (10) so aufweist, daß der Deckel (30) auf dem freien Ende (53) des starren Stabs (52) des Stellantriebs (50) aufliegt, wenn er gegenüber dem Rahmen (10) um einen bestimmten Winkel (B1), der größer als 30 Grad ist, geneigt ist.

4. Zugangsklappe (1) gemäß einem der vorangehenden Ansprüche, bei der die Translationsachse (A2) zur Ebene des Rahmens (10) senkrecht ist.

5. Zugangsklappe (1) gemäß einem der vorangehenden Ansprüche, bei der zwei voneinander entfernt angeordnete und von der Drehachse (A1) gleich weit entfernte Stellantriebe (50) vorgesehen sind.

6. Zugangsklappe (1) gemäß einem der Ansprüche 1 bis 5, bei der der Rahmen (10) wenigstens auf einem Teil seines Umfangs einen inneren Rand (13A) aufweist und bei dem der Mantel (51) des Stellantriebs (50) auf diesem inneren Rand (13A) aufgebracht und an diesem befestigt ist.

7. Zugangsklappe (1) gemäß einem der vorangehenden Ansprüche, bei der die größte Abmessung des Rahmens (10) kleiner als ein Meter ist.

8. Zugangsklappe (1) gemäß einem der vorangehenden Ansprüche, bei der der Rahmen (10) eine rechteckige Form mit vier Abschnitten (12, 13, 14, 15), die die Zugangsöffnung (11) begrenzen, oder eine runde Form mit einer kreisförmigen Seitenwand, die die besagte Zugangsöffnung begrenzt, aufweist.

9. Zugangsklappe (1) gemäß einem der vorangehenden Ansprüche, bei der der Rahmen (10) Mittel für die Befestigung an einem Bodenkasten aufweist.

10. Bodenkasten mit einem vorne offenen Gehäuse und einer Zugangsklappe (1) gemäß dem vorangehenden Anspruch, die an dem Gehäuse befestigt ist, um dessen vordere Öffnung zu verschließen.

## Claims

1. An access hatch (1) for access to electrical accessories that are housed under a floor, the access hatch comprising:
• a closed frame (10) that defines an access opening (11), and that includes fastener means for fastening to a raised floor or to a floor-box casing; and
• a cover (30) that is mounted to pivot on the frame (10) about a pivot axis (A1), between an open position and a closed position of said access opening (11);
the access hatch including at least one actuator (50) comprising a rigid rod (52) that is mounted to move in translation in a sleeve (51), under the control of a damper, along a translation axis (A2) that slopes relative to, or is orthogonal to, said pivot axis (A1), and having a free end (53) that is adapted to support the cover (30) while said cover is tilting into its closed position, the access hatch being **characterized in that** the sleeve (53) is formed integrally with the frame (10).

2. An access hatch (1) according to the preceding claim, wherein the actuator (50) is situated on the frame (10) in such a manner that the distance between said pivot axis (A1) and said translation axis (A2) is less than half the distance between said pivot axis (A1) and the point of the frame (10) the furthest from the pivot axis (A1) .

3. An access hatch (1) according to either preceding claim, wherein the actuator (50) presents a size and a position on the frame (10) such that the cover (30) comes to bear against the free end (53) of the rigid rod (52) of the actuator (50) when it slopes relative to the frame (10), by a determined angle (B1) that is greater than 30 degrees.

4. An access hatch (1) according to any preceding claim, wherein said translation axis (A2) is orthogonal to the mean plane of the frame (10).

5. An access hatch (1) according to any preceding claim, wherein two actuators (50) are provided, situated at a distance apart from each other and at equal distances from said pivot axis (A1).

6. An access hatch (1) according to any one of claims 1 to 5, wherein the frame (10) presents an inner rim (13A) on at least one portion of its outline, and wherein the sleeve (51) of the actuator (50) is fitted and fastened to the inner rim (13A).

7. An access hatch (1) according to any preceding claim, wherein the greatest dimension of the frame (10) is less than one meter.

8. An access hatch (1) according to any preceding claim, wherein the frame (10) presents a shape that is rectangular with four branches (12, 13, 14, 15) that define said access opening (11), or round with a side wall that is circular and that defines said access opening.

9. An access hatch (1) according to any preceding claim, wherein the frame (10) includes fastener means for fastening to a floor-box casing.

10. A floor box comprising a casing that is open at the front and an access hatch (1) according to the preceding claim, which access hatch is fastened to the casing so as to close its front opening.
